**Europäisches Patentamt**

**European Patent Office**

**Office européen des brevets**

(19)

(11) Veröffentlichungsnummer: **0 019 729**
**B1**

(12) # EUROPÄISCHE PATENTSCHRIFT

(45) Veröffentlichungstag der Patentschrift:
**29.09.82**

(21) Anmeldenummer: **80102285.6**

(22) Anmeldetag: **28.04.80**

(51) Int. Cl.³: **G 11 B 3/58**, G 11 B 23/50,
B 08 B 11/00, C 09 K 3/32

(54) **Vorrichtung zur Reinigung von empfindlichen Oberflächen fester Körper.**

(30) Priorität: **29.05.79 DE 2921758**

(43) Veröffentlichungstag der Anmeldung:
**10.12.80 Patentblatt 80/25**

(45) Bekanntmachung des Hinweises auf die Patenterteilung:
**29.09.82 Patentblatt 82/39**

(84) Benannte Vertragsstaaten:
**AT BE CH DE FR GB LI LU NL**

(56) Entgegenhaltungen:
**US-A-3 659 952**
**US-A-3 682 690**
**US-A-3 951 841**
**US-A-4 084 540**
**US-A-4 128 909**

(73) Patentinhaber: **Weil, Peter, Riesstrasse 82,
D-8000 München 50 (DE)**

(72) Erfinder: **Weil, Peter, Riesstrasse 82,
D-8000 München 50 (DE)**

(74) Vertreter: **Patentanwälte Meinke und Dabringhaus
Dipl.-Ing. J. Meinke Dipl.-Ing. W. Dabringhaus,
Westenhellweg 67, D-4600 Dortmund 1 (DE)**

Vorrichtung zur Reinigung von empfindlichen Oberflächen fester Körper

Die Erfindung richtet sich auf eine Vorrichtung zur Reinigung von empfindlichen Oberflächen fester Körper, insbesondere von Schallplatten, optischen Geräten od. dgl. mittels eines eine haftende Arbeitsoberfläche aufweisenden Materials.

Zur Reinigung empfindlicher Oberflächen sind eine Vielzahl von Vorrichtungen bekannt. Die einfachsten sind Staubpinsel, Staubtücher od. dgl. Es ist auch bekannt, empfindliche Oberflächen durch Aufdrücken von Klebebändern und nachfolgendem Abziehen der dann mit der Verunreinigung behafteten Klebeflächen zu reinigen. Die bekannten Möglichkeiten haben den Nachteil, dass durch mechanische Mittel, wie Bürsten, Staubtücher od. dgl. die Gefahr besteht, die feinen Staubteilchen so fest bei der Reinigung mit der Oberfläche in Kontakt zu bringen, dass sie dort Kratzspuren hinterlassen oder aber dass der Staub in beispielsweise Schallplattenrillen nur noch fester eingedrückt wird. Die Möglichkeit Oberflächen mit Klebebändern od. dgl. zu reinigen hat den weiteren Nachteil, dass das Klebemittel auf der zu reinigenden Oberfläche zurückbleiben kann und dann dort zu einer noch grösseren Verunreinigung führt. Auch ist die Herstellung z.B. von Reinigungsrollen und -walzen mit haftender Oberfläche z.B. aus einem Organopolysiloxanelastomer (US-A 4 128 909) aufwendig.

Aus der US-A 3 682 690 ist eine hochviskose Flüssigkeit zur Aufnahme von Verunreinigungen bekannt, ohne dass dort allerdings eine nähere Angabe gemacht ist, um welchen Stoff es sich dabei handelt. Die dortige Lösung soll insbesondere ein nachfolgendes Auswaschen von aufgenommenen Schmutzteilen ermöglichen.

Aufgabe der Erfindung ist die Schaffung einer Lösung, mit welcher die sichere Aufnahme von Verunreinigungteilen an empfindlichen Oberflächen gewährleistet ist, ohne dass die Gefahr einer Verletzung der Oberfläche besteht und ohne dass Rückstände an der Oberfläche haften, insbesondere auch das Erreichen von Fugen und Hinterschneidungen, die ein direktes Aufbringen nicht ermöglichen, möglich gemacht wird.

Bei einer Vorrichtung der eingangs bezeichneten Art wird diese Aufgabe gemäss der Erfindung dadurch gelöst, dass das verwendete Material aus einem hochmolekularen, Boroxangruppen enthaltenden und Eigenschaften einer hochviskosen Flüssigkeit besitzenden Diorganopolysiloxan besteht, dessen Arbeitsoberfläche knetbar veränderbar ist.

Durch die Vorrichtung wird erreicht, dass auch unregelmässige Oberflächen, wie Schallplattenoberflächen, wirksam gereinigt werden können, da sich die Arbeitsfläche jeder beliebigen Form anpassen kann, die Verunreinigung umschliesst und an sich bindet und nach Abheben der Vorrichtung den Staub od. dgl. wirksam von der Oberfläche entfernt. Gleichzeitig ist es möglich, auch an Stellen Verunreinigungen zu entfernen, die mit herkömmlichen Mitteln nicht erreichbar sind, beispielsweise an Rändern von optischen Objekten, an deren Einfassungen, Gewinden od. dgl. Gegenüber den auch bekannten Reinigungsmöglichkeiten mit einer Flüssigkeit ist mit der Erfindung die sofortige Wiederbenutzung der gereinigten Oberfläche, z.B. der Schallplatte, möglich.

Die Erfindung sieht vor, dass die Arbeitsoberfläche aus einem hochmolekularen, Boroxangruppen enthaltenden Diorganopolysiloxan besteht. Ein derartiger Siliconpolymer ist als Therapeutikum bekannt (Information Wackersilicone v. 30.9.77). Es hat sich gezeigt, dass ein derartiges Material eine hohe Staub- und Verunreinigungsaufnahmefähigkeit hat, ohne dass es an Metall, Glas, Kunststoff, Lack usw. haftet.

In weiterer Ausgestaltung ist nach der Erfindung vorgesehen, das die Vorrichtung aus durchgehend dem gleichen Material gebildet ist. So kann sie beispielsweise als Kugel ausgebildet sein, die über die zu reinigende Fläche gerollt wird und dabei durch Deformation sich der Oberfläche des zu reinigenden Körpers anpasst.

In einer abgewandelten Ausführungsform ist nach der Erfindung vorgesehen, dass die Vorrichtung von einem Vorratsbehälter zur Aufnahme des die Arbeitsfläche bildenden Materiales mit einer wenigstens zeitweise freilegbaren Arbeitsfläche gebildet ist. Je nach Fliessverhalten des die Arbeitsfläche bildenden Materiales kann es zweckmässig sein, dieses Material in einem speziellen Behälter aufzubewahren.

Zweckmässig kann es ferner sein, dass der Vorratsbehälter aus einem vom Benutzer deformierbaren Kunststoff besteht, wobei die ggf. durch einen Deckel leicht verschliessbare Arbeitsfläche in der Gebrauchslage durch Deformieren des Vorratsbehälters mit dem Oberflächenmaterial ausfüllbar ist.

Die Erfindung ist nachstehend anhand der Zeichnung beispielsweise näher erläutert. Diese zeigt in

Fig. 1 einen Schnitt durch eine Vorrichtung gemäss der Erfindung und in

Fig. 2 einen Schnitt durch ein anderes Ausführungsbeispiel der Vorrichtung.

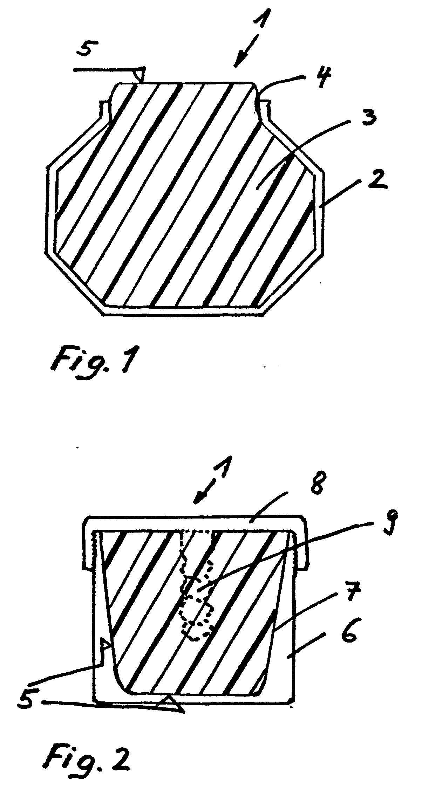

Die in Fig. 1 dargestellte, allgemein mit 1 bezeichnete Vorrichtung zur Reinigung von empfindlichen Oberflächen fester Körper besteht im wesentlichen aus einem Vorratsbehälter 2, der mit einem knetbaren Material 3 gefüllt ist. Am oberen Ende des Vorratsbehälters 2 ist eine ggf. mit einem nicht näher dargestellten Deckel verschliessbare Öffnung 4 vorgesehen, aus der das knetbare Material so weit auspressbar ist, dass die Arbeitsoberfläche 5 gebildet wird, die in Berührung mit der zu reinigenden Oberfläche bringbar ist.

Um die Öffnung 4 mit dem knetbaren Material füllen zu können, kann der Vorratsbehälter 2 beispielsweise aus Gummi oder einem deformierbaren Kunststoffmaterial gefertigt sein, er kann aber auch als Tüte od. dgl. ausgebildet sein.

In Fig. 2 ist eine Variante der Vorrichtung 1 dargestellt. Der dort gezeigte Vorratsbehälter 6 hat eine nach innen leicht konische oder gewölbte Innenwand 7, an der das knetbare Material 3 nicht haftet. Der Deckel 8 ist mit einem beispielsweise als zentraler Gewindestab 9 ausgebildetem Halteelement ausgerüstet, derart, dass bei Abnahme des Deckels 8 das knetbare Material 3 als Reinigungskegel oder Kugelsegment entnommen werden kann und auf die zu reinigende Oberfläche aufsetzbar ist.

## Patentansprüche

1. Vorrichtung zur Reinigung von empfindlichen Oberflächen fester Körper, insbesondere von Schallplatten, optischen Geräten od. dgl. mittels eines eine haftende Arbeitsoberfläche aufweisenden Materials, dadurch gekennzeichnet, dass das verwendete Material (3) aus einem hochmolekularen Boroxangruppen enthaltenden und Eigenschaften einer hochviskosen Flüssigkeit besitzenden Diorganopolysiloxan besteht, dessen Arbeitsoberfläche knetbar veränderbar ist.

2. Vorrichtung nach Anspruch 1, dadurch gekennzeichnet, dass die Vorrichtung (1) aus durchgehend gleichem Material (3) gebildet ist.

3. Vorrichtung nach einem der Ansprüche 1 oder 2, dadurch gekennzeichnet, dass sie von einem Vorratsbehälter (2, 6) zur Aufnahme des die Arbeitsoberfläche (5) bildenden Materiales (3) mit einer wenigstens zeitweise freilegbaren Arbeitsoberfläche (5) gebildet ist.

4. Vorrichtung nach Anspruch 3, dadurch gekennzeichnet, dass der Vorratsbehälter (2) aus einem vom Benutzer deformierbaren Kunststoff besteht, wobei die ggf. durch einen Deckel (8) od. dgl. verschliessbare Arbeitsoberfläche (5) in der Gebrauchslage durch Deformierung des Vorratsbehälters (2) mit dem Oberflächenmaterial (3) ausfüllbar ist.

## Claims

1. A device for cleaning sensitive surfaces of solid bodies, in particular records, optical devices or the like, by means of a material having a sticky working surface, characterised in that the material (3) used comprises a high-molecular diorganopolysiloxane which contains boroxane groups and which has properties of a high-viscosity liquid and the working surface of which can be plastically altered.

2. A device according to claim 1 characterised in that the device (1) is formed from the same material (3) throughout.

3. A device according to one of claims 1 or 2 characterised in that it is formed by a storage container (2, 6) for accommodating the material (3) forming the working surface (5), with a working surface (5) which can be exposed at least from time to time.

4. A device according to claim 3 characterised in that the container (2) comprises a plastics material which is deformable by the user, wherein the working surface (5) which can be optionally covered by a cover member (8) or the like can be filled with the surface material (3), in the position of use, by deformation of the container (2).

## Revendications

1. Dispositif pour le nettoyage de surfaces sensibles de corps solides, notamment de disques, d'appareils optiques ou de corps semblables, au moyen d'un matériau possédant une surface de travail adhésive, caractérisé en ce que le matériau utilisé (3) est constitué par un diorganopolysiloxane de poids moléculaire élevé, contenant des groupes boroxane et possédant les propriétés d'un liquide de viscosité importante, dont la surface de travail peut être modifiée par malaxage.

2. Dispositif suivant la revendication 1, caractérisé en ce que le dispositif (1) est formé sans interruption par le même matériau (3).

3. Dispositif suivant l'une des revendications 1 ou 2, caractérisé en ce qu'il est formé par un réservoir de réserve (2, 6) pour recevoir le matériau (3) formant la surface de travail (5), avec au moins une surface de travail (5) pouvant être libérée par moments.

4. Dispositif suivant la revendication 3, caractérisé en ce que le réservoir de réserve (2) est constitué par une matière synthétique déformable par l'utilisateur, la surface de travail (5) pouvant éventuellement être fermée par un couvercle (8) ou un élément semblable, pouvant être remplie par le matériau (3) de la surface, dans la position d'utilisation, par déformation du réservoir de réserve.

Fig. 1

Fig. 2